# EUROPEAN PATENT APPLICATION

(11) **EP 3 829 013 A1**
(43) Date of publication of application: **02.06.2021**
(21) Application number: 19211564.0
(22) Date of filing: 26.11.2019
(51) Int. Cl.: H02G 3/04, B60Q 1/04, B60R 16/02, H02G 3/06

(54) **CABLE DUCT**

(71) Applicant: ZKW Group GmbH, 3250 Wieselburg (AT)
(72) Inventor: Zubaj, Andrej, 956 19 Krnca (SK); Pavol, Húserka, 913 31 Skalka nad Váhom (SK)
(74) Representative: Patentanwaltskanzlei Matschnig & Forsthuber OG

(57) **Abstract**

Cable duct (10) for a vehicle headlamp and for holding at least one cable, comprising a cable guiding portion (100) configured to guide the at least one cable in a determined position, wherein the cable guiding portion (100) comprises a support portion (110) with at least one first engaging element (110a), wherein the cable duct (10) comprises a foldable holder (200) for holding a control unit, wherein the holder (200) comprises at least one second engaging element (210a), wherein the holder (200) can be brought into an end position (P1) on the support portion (110) by folding the holder (200) towards the support portion (110), such that the at least one first engaging element (110a) engages with the at least one second engaging element (210a) to secure the holder (200) in the end position (P1).

## Description

The invention relates to a cable duct for holding at least one cable, comprising a cable guiding portion configured to guide the at least one cable in a determined position.

The invention also relates to a vehicle headlamp with at least one cable duct according to the invention.

In current vehicle headlamps a cable duct for holding or guiding cables of a control unit and the control unit itself are mounted and assembled separately into a housing of the vehicle headlamp. This has the effect that an assembly of both parts is difficult due to the restriction of space in a housing of a vehicle headlamp. Also, during a service of a vehicle headlamp, an additional part is necessary for fixation of the control unit.

This leads to a significant effort with regard to the assembling of the cable duct and the control unit in a desired position in a vehicle headlamp.

It is an object of the invention to provide an enhanced cable duct.

To achieve this object, the cable guiding portion comprises a support portion with at least one first second engaging element, wherein the cable duct comprises a foldable holder for holding a housing of a control unit, which holder is pivotably connected to the cable guiding portion, wherein the holder comprises at least one second engaging element, wherein the holder can be brought into an end position on the support portion by folding the holder towards the support portion, such that the at least one first engaging element engages with the at least one second engaging element.

This allows the possibility to easy exchange the control unit during service in the housing, allows better balance for assembly operations, allows more flexibility of spacing of the control unit and allows easier assembly outside of the housing.

It should be noted, that apart from a housing of a control unit, the holder is also suitable to hold a PCB (printed circuit board), module, data bus or any electronic element.

Advantageously, the at least one first engaging element is built as a latching-element and the at least one second engaging element is built as a counter latching-element.

Advantageously, the at least one first engaging element is built as a detent lug and the at least one second engaging element is built as a rigid leg, wherein the rigid led snaps in the detent lug, when the holder is in the end position.

Advantageously, the holder comprises at least two second engaging elements, preferably exactly two second engaging elements.

Advantageously, the support portion comprises at least two first engaging elements, preferably exactly two first engaging elements.

Advantageously, the support portion comprises at least one protrusion configured to limit the folding of the holder towards the support portion, wherein the holder abuts on the at least one protrusion in the end position of the holder.

This has the advantage, that the holder cannot be folded beyond the desired end position. This also prevents, that the holder is shaking during naturally occurring vibrations of the vehicle headlamp or vehicle, in which the vehicle headlamp and the cable duct is installed.

Advantageously, the at least one second engaging element of the holder abuts on the at least one protrusion.

Advantageously, the support portion comprises at least two protrusions, preferably exactly two protrusions.

Advantageously, the holder is connected with the cable guiding portion by means of a hinge film.

Advantageously, the holder is connected with the cable guiding portion by means of a rotary hinge.

Advantageously, the cable duct is being made of an integral piece of material. The term "integral piece" can also be understood as "monolithic".

Advantageously, the cable duct is made of one material.

Advantageously, the cable duct is made in a molding process.

The object of the invention is also be achieved by a vehicle headlamp with at least one cable duct.

In the following, in order to further demonstrate the present invention, illustrative and non-restrictive embodiments are discussed, as shown in the drawings, which show:
- Fig. 1: an example of a cable duct with a support portion comprising two first engaging elements, and a holder comprising two second engaging elements,
- Fig. 2: a detailed view of the first and second engaging elements of the support portion and the holder,
- Fig. 3: the cable duct of Fig. 1, wherein the holder is in an end position,
- Fig. 4: a detailed view of the end position of the holder, wherein the second engaging elements engage with the first engaging elements.

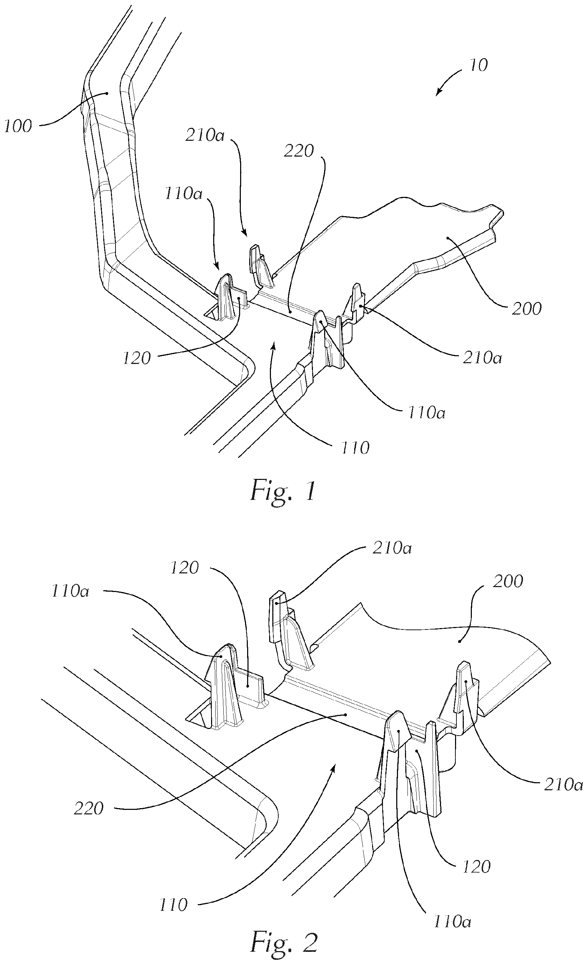

**Fig. 1** shows a cable duct **10** for a vehicle headlamp and for holding at least one cable, wherein the cable duct **10** comprises a cable guiding portion **100** configured to guide the at least one cable in a determined position.

Further, the cable guiding portion **100** comprises a support portion **110** with two first engaging elements **110a,** wherein the cable duct **10** also comprises a foldable holder **200** for holding a housing of a control unit, which holder **200** is pivotably connected to the cable guiding portion **100** wherein the holder **200** comprises two second engaging elements **210a,** each of which is assigned to one first engaging element **110a** of the support portion **110.** In the shown example, the two first engaging elements **110a** are built as a detent lug and two second engaging elements **210a** are built as a rigid leg, which can be seen in more detail in **Fig. 2****.**

The holder **200** is connected with the cable duct **10,** in particular with the support portion **110** of the cable duct **10,** by means of a hinge film **220,** wherein the cable duct **10** is built monolithic and is made of an integral piece of material in a moulding process.

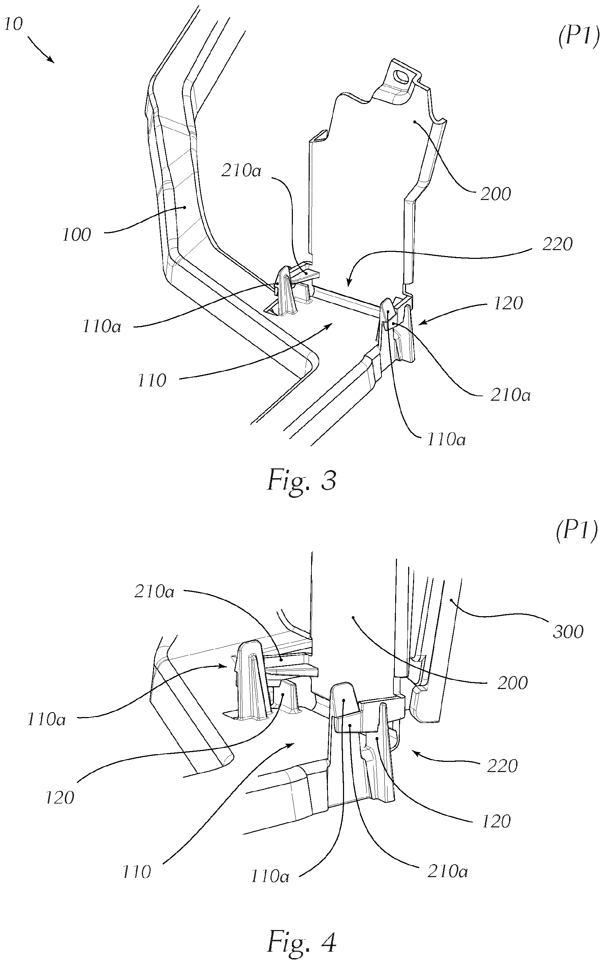

The holder **200** can be brought into an end position **P1** on the support portion **110** by folding the holder **200** towards the support portion **110,** such that the first engaging elements **110a** engages with the at least one second engaging element **210a** to secure the holder in the end position **P1,** in particular the second engaging elements **210a** formed as rigid legs snap in the first engaging elements **110a** formed as detent lugs, when the holder **200** is in the end position **PI,** which can be seen in **Fig. 3** and more detailed in **Fig. 4****.**

In order to limit the folding of the holder **200** towards the support portion **110,** the support portion **110** comprises two protrusions **120,** wherein the holder **200,** in particular the second engaging elements **210a,** abuts on the protrusions **120** in the end position **PI,** which can be clearly seen in **Fig. 4****,** wherein **Fig. 4** also shows a mounted housing of a control unit **300** on the holder **200.**

**LIST OF REFERENCE SIGNS**

| | |
|---|---|
| Cable duct... | 10 |
| Cable guiding portion... | 100 |
| Support portion... | 110 |
| First engaging element... | 110a |
| Protrusion... | 120 |
| Holder... | 200 |
| Second engaging element... | 210a |
| Housing of a control unit... | 300 |
| End position... | P1 |

## Claims

1. Cable duct (10) for holding at least one cable, comprising a cable guiding portion (100) configured to guide the at least one cable in a determined position,
**characterized in that**
the cable guiding portion (100) comprises a support portion (110) with at least one first engaging element (110a), wherein the cable duct (10) comprises a foldable holder (200) for holding a housing of a control unit, which holder (200) is pivotably connected with the cable guiding portion (100), wherein the holder (200) comprises at least one second engaging element (210a), wherein the holder (200) can be brought into an end position (P1) on the support portion (110) by folding the holder (200) towards the support portion (110), such that the at least one first engaging element (110a) engages with the at least one second engaging element (210a) to secure the holder in the end position (P1).

2. Cable duct according to claim 1, **wherein** the at least one first engaging element (110a) is shaped as a latching-element and the at least one second engaging element (210a) is shaped as a counter latching-element.

3. Cable duct according to claim 1 or 2, **wherein** the at least one first engaging element (110a) is built as a detent lug and the at least one second engaging element (210a) is built as a rigid leg, wherein the rigid leg snaps in the detent lug, when the holder (200) is in the end position (P1).

4. Cable duct according to any of the claims 1 to 3, **wherein** the holder (200) comprises at least two second engaging elements (210a), preferably exactly two second engaging elements (210a).

5. Cable duct according to any of the claims 1 to 4, **wherein** the support portion (110) comprises at least two first engaging elements (110a), preferably exactly two first engaging elements (110a).

6. Cable duct according to any of the claims 1 to 5, **wherein** the support portion (110) comprises at least one protrusion (120) configured to limit the folding of the holder (200) towards the support portion (110), wherein the holder (200) abuts on the at least one protrusion (120) in the end position (P1) of the holder (200).

7. Cable duct according to claim 6, **wherein** the at least one second engaging element (210a) of the holder (200) abuts on the at least one protrusion (120).

8. Cable duct according to claims 6 or 7, **wherein** the support portion (110) comprises a least two protrusions (120), preferably exactly two protrusions (120).

9. Cable duct according to any of the claims 1 to 8, **wherein** the holder (200) is connected with the cable guiding portion (100) by means of a hinge film (220).

10. Cable duct according to any of the claims 1 to 8, **wherein** the holder (200) is connected with the cable guiding portion (100) by means of a rotary hinge.

11. Cable duct according to any of the claims 1 to 10, **wherein** the cable duct (10) is being made of an integral piece of material.

12. Cable duct according to claim 11, **wherein** the cable duct (10) is made of one material.

13. Cable duct according to any of the claims 1 to 12, **wherein** the cable duct (10) is made in a moulding process.

14. Vehicle headlamp with at least one cable duct (10) according to any of the claims 1 to 13.
